# EUROPÄISCHE PATENTANMELDUNG

(11) **EP 1 603 317 A2**
(43) Veröffentlichungstag der Anmeldung: **07.12.2005**
(21) Anmeldenummer: 05011827.2
(22) Anmeldetag: 01.06.2005
(51) Int. Cl.: H04M 1/725, H04Q 7/32

(54) **Verfahren zum Einrichten und/oder Aktivieren einer Funktionalität für ein Telekommunikationsgerät**

(30) Priorität: 04.06.2004 DE 102004027313
(71) Anmelder: Giesecke & Devrient GmbH, 81677 München (DE)
(72) Erfinder: Finkenzeller, Klaus, 85774 Unterföhring (DE)

(57) **Zusammenfassung**

Die Erfindung betrifft ein Verfahren zum Einrichten und/oder Aktivieren einer Funktionalität für ein erstes und/oder ein zweites Telekommunikationsgerät (1, 2,16, 23). Beim erfindungsgemäßen Verfahren werden das erste Telekommunikationsgerät (1, 2,16, 23) und das zweite Telekommunikationsgerät (1, 2,16, 23) oder eine dem zweiten Telekommunikationsgerät (1, 2, 16, 23) zugeordnete Einheit (14,15, 20) einander angenähert. Dann wird eine direkte Datenübertragung zwischen dem ersten Telekommunikationsgerät (1, 2,16, 23) und dem zweiten Telekommunikationsgerät (1, 2,16, 23) oder der dem zweiten Telekommunikationsgerät (1, 2, 16, 23) zugeordneten Einheit (14, 15, 20) durchgeführt und es werden im Rahmen der Datenübertragung für die Einrichtung und/ oder Aktivierung der Funktionalität benötigte Informationen übertragen.

## Beschreibung

Die Erfindung betrifft ein Verfahren zum Einrichten und/oder Aktivieren einer Funktionalität für ein erstes und/oder ein zweites Telekommunikationsgerät. Weiterhin betrifft die Erfindung ein System, mit dem ein derartiges Verfahren durchführbar ist.

Zur Inanspruchnahme von Telekommunikationsdiensten stehen sowohl Festnetze mit stationären Netzzugangspunkten und daran angeschlossenen Endgeräten als auch Mobilfunknetze mit mobilen Endgeräten zur Verfügung. Die Festnetze und die Mobilfunknetze werden in der Regel durch eine unterschiedliche Infrastruktur realisiert und von unterschiedlichen Anbietern betrieben. Allerdings werden zunehmend Telekommunikationsdienste angeboten, die sowohl in Festnetzen als auch in Mobilfunknetzen verfügbar sind. Dabei besteht die Zielsetzung mitunter darin, dem Benutzer die Nutzung dieser Telekommunikationsdienste von jedem mobilen Endgerät oder jedem stationären Endgerät an jedem kompatiblen Netzzugangspunkt zur Verfügung zu stellen. Die tatsächliche Realisierung, die sowohl auf Festnetze als auch auf Mobilfunknetze zurückgreift und dem Benutzer verborgen bleiben sollte, ist allerdings sehr komplex ausgebildet und bringt eine Vielzahl von Problemen mit sich. In vielen Fällen ist zudem eine aktive und mitunter aufwendige Mitwirkung des Benutzers erforderlich. Beispielsweise ist es für eine Umleitung einer Rufnummer eines Mobilfunktelefons auf einen Festnetzanschluss erforderlich, an dem Mobilfunktelefon manuell eine Aktivierung der Rufumleitung zu veranlassen. Dabei muss insbesondere die Rufnummer, auf die umgeleitet werden soll, manuell eingegeben werden. Außerdem muss das Mobilfunktelefon zum Zeitpunkt der Aktivierung der Rufumleitung selbst in das Mobilfunknetz eingebucht sein.

Der Erfindung liegt die Aufgabe zugrunde, die Einrichtung und/oder Aktivierung einer Funktionalität für ein Telekommunikationsgerät möglichst einfach und komfortabel zu gestalten.

Diese Aufgabe wird durch ein Verfahren mit der Merkmalskombination des Anspruchs 1 gelöst.

Beim erfindungsgemäßen Verfahren zum Einrichten und/oder Aktivieren einer Funktionalität für ein erstes und/oder ein zweites Telekommunikationsgerät werden das erste Telekommunikationsgerät und das zweite Telekommunikationsgerät oder eine dem zweiten Telekommunikationsgerät zugeordnete Einheit einander angenähert. Dann wird eine direkte Datenübertragung zwischen dem ersten Telekommunikationsgerät und dem zweiten Telekommunikationsgerät oder der dem zweiten Telekommunikationsgerät zugeordneten Einheit durchgeführt und es werden im Rahmen der Datenübertragung für die Einrichtung und/oder Aktivierung der Funktionalität benötigte Informationen übertragen.

Die Erfindung hat den Vorteil, dass die Einrichtung und/oder Aktivierung der Funktionalität mit wenig Aufwand schnell und zuverlässig durchführbar ist.

Um beispielsweise eine unbeabsichtigte Einrichtung und/oder Aktivierung der Funktionalität durch eine versehentliche Annäherung der beiden Telekommunikationsgeräte bzw. der zugeordneten Einheit zu vermeiden, kann die Einrichtung und/oder Aktivierung der Funktionalität von einer Eingabe auf einem der beiden Telekommunikationsgeräte abhängig gemacht werden.

Die Datenübertragung zwischen dem ersten Telekommunikationsgerät und dem zweiten Telekommunikationsgerät oder der dem zweiten Telekommunikationsgerät zugeordneten Einheit wird vorzugsweise kontaktlos durchgeführt. Dadurch wird die Abwicklung des erfindungsgemäßen Verfahrens vereinfacht und beschleunigt und es werden Probleme vermieden, die durch nicht kompatible oder verschmutzte bzw. verschlissene Kontakte entstehen können. Insbesondere wird die Datenübertragung in Form einer Nahfeldkommunikation durchgeführt. Dies hat den Vorteil, dass der dafür erforderliche Aufwand vergleichsweise gering ist und durch die kurze Übertragungsreichweite ein gezieltes Starten der Datenübertragung leicht möglich ist sowie die Wahrscheinlichkeit für störende Fremdeinflüsse relativ gering ist. Um ein möglichst hohes Sicherheitsniveau zu erzielen, kann im Rahmen der Datenübertragung eine Authentisierung durchgeführt werden. Weiterhin besteht die Möglichkeit, im Rahmen der Datenübertragung weitere Informationen, insbesondere Informationen über ein im ersten oder zweiten Telekommunikationsgerät gespeichertes Telefonbuch, zu übertragen. Auf diese Weise können die Telekommunikationsgeräte für die nachfolgende Nutzung optimal konfiguriert werden.

Im Rahmen des erfindungsgemäßen Verfahrens kann es vorgesehen sein, dass während der Einrichtung und/ oder Aktivierung der Funktionalität für das erste und/ oder das zweite Telekommunikationsgerät eine Datenverbindung zu einem Server eines Netzbetreibers oder Dienstanbieters hergestellt wird. Dies wird insbesondere dann der Fall sein, wenn sich die Funktionalität auf den Netzbetreiber oder Dienstanbieter auswirkt. Weiterhin kann vorgesehen sein, dass beim Aktivieren der Funktionalität für das erste und/ oder das zweite Telekommunikationsgerät eine Telekommunikationsschnittstelle des ersten oder zweiten Telekommunikationsgeräts deaktiviert wird, die für die Abwicklung der Telekommunikation vorgesehen ist. Dies ist insbesondere in einer Umgebung von Vorteil, in der die Abstrahlung elektromagnetischer Wellen unerwünscht ist, beispielsweise in Krankenhäusern, an Bord von Flugzeugen usw.

Bei einer Variante des erfindungsgemäßen Verfahrens verbleiben das erste Telekommunikationsgerät und das zweite Telekommunikationsgerät oder die dem zweiten Telekommunikationsgerät zugeordnete Einheit nach Einrichtung und/oder Aktivierung der Funktionalität in der aneinander angenäherten Position. Dies hat den Vorteil, dass weiterhin eine Datenübertragung möglich ist. Insbesondere wird dadurch ermöglicht, dass die Bedienung des ersten Telekommunikationsgeräts wenigstens teilweise über eine Bedienoberfläche des zweiten Telekommunikationsgeräts oder umgekehrt durchgeführt wird. Dies bedeutet beispielsweise, dass ein Benutzer mittels seines Telekommunikationsgeräts und somit unter Verwendung einer ihm vertrauten Bedienoberfläche ein weiteres Telekommunikationsgerät bedienen kann.

Für die Deaktivierung der zuvor für das erste und/ oder das zweite Telekommunikationsgerät aktivierten Funktionalität sind im Rahmen der Erfindung unterschiedliche Möglichkeiten vorgesehen. Beispielsweise kann die Deaktivierung durch eine Mitteilung des ersten oder zweiten Telekommunikationsgeräts an den Server des Netzbetreibers oder Dienstanbieters vorgenommen werden. Ebenso ist es auch möglich, die Funktionalität dann zu deaktivieren, wenn für das erste oder zweite Telekommunikationsgerät die Entfernung zwischen seiner aktuellen Position und seiner Position zum Zeitpunkt der Aktivierung der Funktionalität einen vorgegebenen Wert überschreitet. Schließlich kann die Deaktivierung auch nach dem Verstreichen eines vorgegebenen Zeitraums seit dem Zeitpunkt der Aktivierung vorgenommen werden.

Im Rahmen der Einrichtung und/ oder Aktivierung der Funktionalität für das erste und/ oder das zweite Telekommunikationsgerät kann eine Funktion des zweiten Telekommunikationsgeräts auf das erste Telekommunikationsgerät oder umgekehrt übertragen werden. Insbesondere kann eine Rufumleitung zwischen dem ersten und dem zweiten Telekommunikationsgerät eingerichtet und/ oder aktiviert werden. Ebenso ist es auch möglich, dass das erste Telekommunikationsgerät beim zweiten Telekommunikationsgerät für eine Inanspruchnahme des Netzzugangs des zweiten Telekommunikationsgeräts angemeldet wird. Dies hat den Vorteil, dass das erste Telekommunikationsgerät auch dann betrieben werden kann, wenn das für das erste Telekommunikationsgerät vorgesehene Netz nicht verfügbar ist. Ein weiterer Vorteil kann in einer dadurch realisierten Gebührenersparnis bestehen. Die Kontrolle über die Inanspruchnahme des Netzzugangs des zweiten Telekommunikationsgeräts kann dadurch ausgeübt werden, dass die Annäherung des ersten Telekommunikationsgeräts und des zweiten Telekommunikationsgeräts oder der dem zweiten Telekommunikationsgerät zugeordneten Einheit an Bedingungen geknüpft wird. Eine derartige Zugangskontrolle lässt sich mit einem sehr geringen Aufwand realisieren. Die Inanspruchnahme des Netzzugangs des zweiten Telekommunikationsgeräts kann über eine schnurlose Kommunikation zwischen dem ersten und dem zweiten Telekommunikationsgerät, insbesondere gemäß dem Digital Enhanced Cordless Telephone Standard (DECT), erfolgen.

Das erfindungsgemäße System weist in einer ersten Variante ein erstes und ein zweites Telekommunikationsgerät auf. Die beiden Telekommunikationsgeräte verfügen jeweils über eine Schnittstelle, über die eine direkte Datenübertragung zwischen den beiden Telekommunikationsgeräten durchführbar ist. Die Besonderheit dieser Variante des erfindungsgemäßen Systems besteht darin, dass eine Funktionalität für das erste und/ oder das zweite Telekommunikationsgerät mit Hilfe einer über die Schnittstellen abgewickelten Übertragung von Informationen zwischen den beiden Telekommunikationsgeräten einrichtbar und/ oder aktivierbar ist.

Bei einer zweiten Variante des erfindungsgemäßen Systems sind wiederum ein erstes und ein zweites Telekommunikationsgerät vorgesehen, wobei das erste Telekommunikationsgerät über eine Schnittstelle verfügt. Dem zweiten Telekommunikationsgerät ist eine Einheit zugeordnet, mit der das erste Telekommunikationsgerät über die Schnittstelle kommunizieren kann. Die Besonderheit der zweiten Variante des erfindungsgemäßen Systems besteht darin, dass eine Funktionalität für das erste und/oder das zweite Telekommunikationsgerät mit Hilfe einer über die Schnittstelle abgewickelten Übertragung von Informationen zwischen dem ersten Telekommunikationsgerät und der dem zweiten Telekommunikationsgerät zugeordneten Einheit einrichtbar und/ oder aktivierbar ist.

Die dem zweiten Telekommunikationsgerät zugeordnete Einheit kann als ein externes Sicherheitsmodul, ein kontaktloses Label oder als ein Gerät ausgebildet sein, das in Datenverbindung mit dem zweiten Telekommunikationsgerät steht.

Bei beiden Varianten des erfindungsgemäßen Systems kann es sich bei dem ersten und dem zweiten Telekommunikationsgerät um ein Endgerät eines Festnetzes oder eines Funkkommunikationsnetzes handeln. Diese Endgerätetypen können beliebig miteinander kombiniert werden, so dass das erfindungsgemäße System sehr vielseitig ausgebildet sein kann. In einer Weiterbildung weist das erste Telekommunikationsgerät eine Aufnahmeeinrichtung zur Aufnahme des zweiten Telekommunikationsgeräts oder der dem zweiten Telekommunikationsgerät zugeordneten Einheit auf. Dadurch wird ein länger dauernder Verbleib des zweiten Telekommunikationsgeräts oder der zugeordneten Einheit in einer definierten Entfernung zum ersten Telekommunikationsgerät erleichtert.

Die Erfindung wird nachstehend anhand der in der Zeichnung dargestellten Ausführungsbeispiele erläutert.

Es zeigen:
- Fig.1: eine vereinfachte Blockdarstellung eines ersten Ausführungsbeispiels eines Systems gemäß der Erfindung,
- Fig. 2: eine schematische Darstellung einer möglichen konstruktiven Ausgestaltung des ersten Ausführungsbeispiels des erfindungsgemäßen Systems, die eine länger dauernde Anordnung des Mobilfunktelefons in unmittelbarer Nähe zum Festnetztelefon ermöglicht,
- Fig. 3: ein zweites Ausführungsbeispiel des erfindungsgemäßen Systems in einer Fig.1 entsprechenden Darstellung,
- Fig. 4: ein drittes Ausführungsbeispiel des erfindungsgemäßen Systems in einer Fig.1 entsprechenden Darstellung,
- Fig. 5: ein viertes Ausführungsbeispiel des erfindungsgemäßen Systems in einer Fig.1 entsprechenden Darstellung,
- Fig. 6: ein fünftes Ausführungsbeispiel des erfindungsgemäßen Systems in einer Fig.1 entsprechenden Darstellung und
- Fig. 7: ein sechstes Ausführungsbeispiel des erfindungsgemäßen Systems in einer Fig.1 entsprechenden Darstellung.

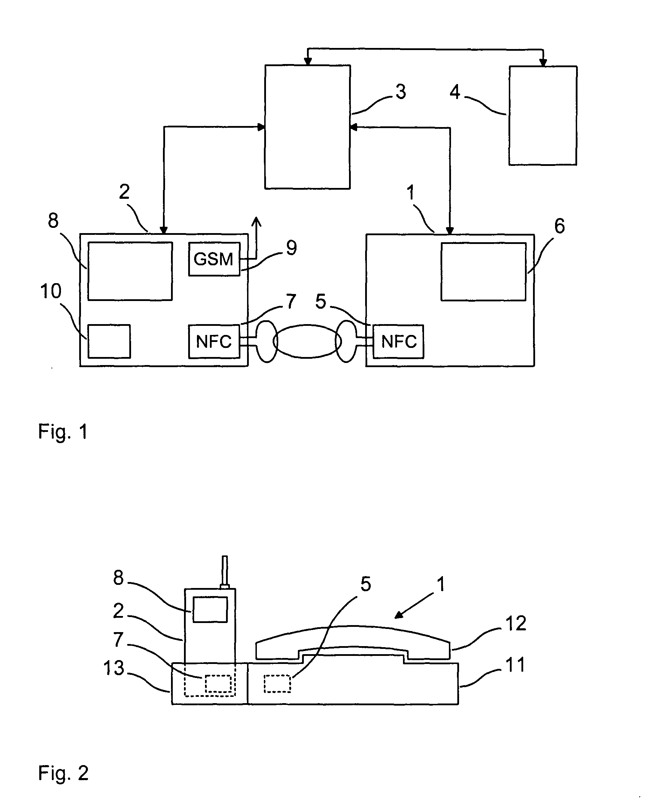

Fig.1 zeigt eine vereinfachte Blockdarstellung eines ersten Ausführungsbeispiels eines Systems gemäß der Erfindung. Das System weist ein Festnetztelefon 1, ein Mobilfunktelefon 2, einen Mobilfunkserver 3 und einen zusätzlichen Server 4 auf. Wie durch entsprechende Pfeile angedeutet ist, kann sowohl das Festnetztelefon 1 als auch das Mobilfunktelefon 2 eine Datenverbindung zum Mobilfunkserver 3 aufbauen. Der Mobilfunkserver 3 ist wenigstens zeitweise mit dem zusätzlichen Server 4 verbunden.

Das Festnetztelefon 1 weist eine NFC-Schnittstelle 5 auf, die durch einen entsprechenden Baustein ausgebildet wird und mit deren Hilfe das Festnetztelefon 1 unabhängig vom Festnetz eine kontaktlose Datenübertragung über kurze Entfernungen durchführen kann. NFC steht dabei für Near Field Communication und bezeichnet ein Übertragungsverfahren mittels magnetischer Felder insbesondere im Frequenzbereich 13,56 MHz. Die typische Übertragungsreichweite der NFC-Schnittstelle 5 beträgt etwa 20 cm. Statt der NFC- Schnittstelle 5 kann auch eine andere Schnittstelle insbesondere für die Nahbereichskommunikation, wie z.B. Infrarot (IRDA), Bluetooth, WLAN, Dual-Interface-SIM-Card, etc., verwendet werden. Das Festnetztelefon 1 weist außerdem eine Anzeige 6 auf, die beispielsweise Einträge eines im Festnetztelefon 1 gespeicherten Telefonbuchs oder sonstige Informationen anzeigen kann. Daneben verfügt das Festnetztelefon 1 noch über eine Vielzahl weiterer Komponenten, die allerdings aus Gründen der Übersichtlichkeit nicht figürlich dargestellt sind.

Das Mobilfunktelefon 2 weist analog zum Festnetztelefon 1 eine NFC-Schnittstelle 7 und eine Anzeige 8 auf. Ähnlich wie beim Festnetztelefon 1 kann auch die NFC-Schnittstelle 7 des Mobilfunktelefons 2 durch eine andere Schnittstelle ersetzt werden. Weiterhin weist das Mobilfunktelefon 2 eine Telekommunikationsschnittstelle 9 auf, über die eine Verbindung mit einem Mobilfunksystem, beispielsweise gemäß dem GSM-Standard (Global Systems for Mobile Communications) hergestellt werden kann. Über die Telekommunikationsschnittstelle 9 wird die Telekommunikation, beispielsweise Telefongespräche, Kurznachrichten oder sonstige Telekommunikationsdienste, abgewickelt. Die dafür benötigten sicherheitsrelevanten Daten sind in einem internen Sicherheitsmodul 10 gespeichert, das beispielsweise als eine Chipkarte ausgebildet ist, die in das Mobilfunktelefon 2 eingesteckt ist.

Bei dem in Fig. 1 dargestellten System kann beispielsweise eine Rufumleitung von der Rufnummer des Mobilfunktelefons 2 zur Rufnummer des Festnetztelefons 1 realisiert werden, so dass mit dem Festnetztelefon 1 Anrufe entgegengenommen werden können, die für das Mobilfunktelefon 2 eingehen. Zur Einrichtung und Aktivierung dieser Rufumleitung kann erfindungsgemäß folgendermaßen vorgegangen werden:

Das Mobilfunktelefon 2 wird dem Festnetztelefon 1 so weit angenähert, dass sich die NFC-Schnittstelle 5 des Festnetztelefons 1 und die NFC-Schnittstelle 7 des Mobilfunktelefons 2 zueinander in Übertragungsreichweite befinden. Dann wird eine Datenübertragung zwischen der NFC-Schnittstelle 5 des Festnetztelefons 1 und der NFC-Schnittstelle 7 des Mobilfunktelefons 2 durchgeführt, um die Rufumleitung einzurichten. Um ein unerwünschtes Einrichten der Rufumleitung bei einer versehentlichen Annäherung des Mobilfunktelefons 2 an das Festnetztelefon 1 zu vermeiden, ist das erfindungsgemäße Verfahren vorzugsweise so ausgebildet, dass für die Einrichtung der Rufumleitung eine Eingabe oder Menüauswahl auf dem Mobilfunktelefon 2 erforderlich ist.

Im Rahmen der Datenübertragung über die NFC-Schnittstellen 5 und 7 kann zunächst eine Authentisierung durchgeführt werden, um einen Missbrauch zu verhindern. Dann wird gemäß einer Variante des erfindungsgemäßen Verfahrens ein Datensatz vom Mobilfunktelefon 2 an das Festnetztelefon 1 übermittelt, der Daten für eine Kontaktaufnahme mit dem Mobilfunkserver 3 und für die Einrichtung der Rufumleitung enthält. Bei diesen Daten kann es sich beispielsweise um eine Internet Protocol (IP) Adresse, einen Uniform Resource Locator (URL) und Daten zum Home-Netz des Mobilfunktelefons 2, wie zum Beispiel Angaben zum Mobilfunkbetreiber, zum Home Location Register (HLR), zum Visitor Location Register (VLR), um Daten in Form einer speziellen Telefonnummer usw. handeln. Das Festnetztelefon 1 baut mit Hilfe des vom Mobilfunktelefon 2 übermittelten Datensatzes eine Verbindung zum Mobilfunkserver 3 auf, um die Umleitung der dem Mobilfunktelefon 2 zugeordneten Rufnummer auf das Festnetztelefon 1 anzufordern. Die für die Anforderung benötigten Daten sind ebenfalls in dem vom Mobilfunktelefon 2 übermittelten Datensatz enthalten. Die Übermittlung der Daten kann z.B. über eine Datenverbindung (integriertes bidirektionales Modem) oder auch an eine Telefonnummer über eine DTMF-Folge (unidirektional) erfolgen. Ferner ist auch denkbar, eine SMS im Festnetz zur Übertragung der Daten zu nutzen, wobei der Rückkanal über CLIP (calling line identification presentation), einen ISDN-Kanal, etc. realisiert werden kann.

Alternativ dazu besteht auch die Möglichkeit, dass das Mobilfunktelefon 2 über seine NFC-Schnittstelle 7, die NFC-Schnittstelle 5 des Festnetztelefons 1 und die vom Festnetztelefon 1 zum Mobilfunkserver 3 aufgebaute Verbindung mit dem Mobilfunkserver 3 kommuniziert, um die Rufumleitung einzurichten. Dies bedeutet, dass dann das Mobilfunktelefon 2 der aktive Kommunikationspartner des Mobilfunkservers 3 ist und das Festnetztelefon 1 lediglich eine Weiterleitungsfunktion übernimmt. Durch eine entsprechend abgewandelte Vorgehensweise ist mit dem in Fig.1 dargestellten System auch eine Rufumleitung vom Festnetztelefon 1 zum Mobilfunktelefon 2 möglich.

Bei den vorstehend beschriebenen Varianten zur Einrichtung der Rufumleitung ist es jeweils nicht erforderlich, dass das Mobilfunktelefon 2 in ein Mobilfunknetz eingebucht ist. Nach dem Einrichten der Rufumleitung können unter der Rufnummer des Mobilfunktelefons 2 eingehende Gespräche am Festnetztelefon 1 entgegengenommen werden. Die Rufumleitung kann auch so eingerichtet werden, dass mit dem Festnetztelefon 1 geführte ausgehende Gespräche über die Rufnummer des Mobilfunktelefons 2 abgerechnet werden. In diesem Zusammenhang ist vorgesehen, dass der Benutzer des Festnetztelefons 1 jeweils entscheiden kann, ob die Abrechnung des Gesprächs über die Rufnummer des Festnetztelefons 1 oder die Rufnummer des Mobilfunktelefons 2 erfolgen soll. Um eine unberechtigte Nutzung der Rufnummer des Mobilfunktelefons 2 zu verhindern, kann vorgesehen werden, dass jeweils unmittelbar vor einem Verbindungsaufbau unter der Rufnummer des Mobilfunktelefons 2 über die NFC-Schnittstellen 5 und 7 eine Authentisierung zwischen dem Festnetztelefon 1 und dem Mobilfunktelefon 2 durchgeführt wird.

Bei einer Abwandlung des erfindungsgemäßen Verfahrens wird zur Einrichtung der Rufumleitung anstelle der Datenverbindung zwischen dem Festnetztelefon 1 und dem Mobilfunkserver 3 eine Datenverbindung zwischen dem Mobilfunktelefon 2 und dem Mobilfunkserver 3 ausgebildet und über diese Datenverbindung mit dem Mobilfunkserver 3 kommuniziert. Ansonsten wird in analoger Weise wie bereits beschrieben vorgegangen.

In einer Weiterbildung des erfindungsgemäßen Verfahrens werden die auf das Festnetztelefon 1 umgeleiteten Rufnummern dem Benutzer des Festnetztelefons 1 beispielsweise in vorgegebenen zeitlichen Intervallen oder auf manuelle Anforderung hin angezeigt. Hierfür kann die Anzeige 6 des Festnetztelefons 1 verwendet werden, wobei beispielsweise der Status einer Rufumleitung oder eine Liste aller Rufumleitungen dargestellt wird. Statt der Rufnummer kann auch jeweils ein der Rufnummer zugeordneter Telefonbucheintrag angezeigt werden, soweit ein solcher Eintrag im Festnetztelefon 1 verfügbar ist. Auch auf der Anzeige 8 des Mobilfunktelefons 2 kann der Zustand der Rufumleitung angezeigt werden. Insbesondere kann auch die Rufnummer des Festnetztelefons 1 angezeigt werden, auf welche die Rufnummer des Mobilfunktelefons 2 umgeleitet ist. Auch hier kann die Anzeige der Rufnummer jeweils durch eine Anzeige des zugehörigen Telefonbucheintrags des Mobilfunktelefons 2 ersetzt werden. Um dem Benutzer eine gewisse Orientierung zu ermöglichen, kann bei einem eingehenden Anruf auf der Anzeige 6 des Festnetztelefons 1 dargestellt werden, an welche Rufnummer der eingehende Anruf ursprünglich gerichtet war. Ebenso kann auch der Klingelton des Festnetztelefons 1 abhängig von der Rufnummer variieren oder dem Benutzer ein andersartiger Hinweis gegeben werden.

Bei der vorstehend beschriebenen Rufumleitung ersetzt das Festnetztelefon 1 das Mobilfunktelefon 2 nach Einrichtung der Rufumleitung im Rahmen der Möglichkeiten des Festnetztelefons 1 vollständig. Alternativ dazu ist es auch möglich, die Rufumleitung so einzurichten, dass weiterhin teilweise auf das Mobilfunktelefon 2 zurückgegriffen werden kann. In diesem Fall wird das Mobilfunktelefon 2 auch nach der Einrichtung der Rufumleitung in Übertragungsreichweite zur NFC-Schnittstelle 5 des Festnetztelefons 1 belassen. Hierzu kann am Festnetztelefon 1 eine spezielle Halterung für das Mobilfunktelefon 2 vorgesehen sein. Eine mögliche Ausgestaltung einer derartigen Anordnung ist in Fig. 2 dargestellt. Bei der Nutzung des Festnetztelefons 1 kann dann auf Funktionen und/ oder Bedienelemente des Mobilfunktelefons 2 zurückgegriffen werden und umgekehrt, wobei die dazu erforderliche Datenübertragung zwischen dem Festnetztelefon 1 und dem Mobilfunktelefon 2 über die NFC-Schnittstellen 5 und 7 abgewickelt wird. So kann zum Beispiel eine Rufnummer aus dem Telefonbuch des Mobilfunktelefons 2 ausgewählt werden, indem das Mobilfunktelefon 2 auf die dafür vorgesehene Weise bedient wird. Beim Anwählen der Rufnummer wird jedoch nicht die Telekommunikationsschnittstelle 9 des Mobilfunktelefons 2 aktiviert, sondern es werden die Daten des Anrufs, insbesondere die Rufnummer, über die NFC-Schnittstelle 7 des Mobilfunktelefons 2 an die NFC-Schnittstelle 5 des Festnetztelefons 1 übertragen. Das Festnetztelefon 1 baut daraufhin eine entsprechende Verbindung auf. In analoger Weise kann auch eine Verbindung abgebaut werden und es können Kurznachrichten gesendet und empfangen werden. Ebenso können auch andere Dienste genutzt werden. Zum Beispiel kann gemäß diesem Schema ein E-Mail Server angesprochen werden, indem eine GPRS Verbindung über die NFC-Schnittstellen 7 und 5 übertragen wird. GPRS steht dabei für General Packet Radio System und ermöglicht eine Datenübertragung mit einer vergleichsweise hohen Übertragungsrate.

Die vorstehend beschriebene kombinierte Nutzung des Festnetztelefons 1 und des Mobilfunktelefons 2 kann insbesondere auch bei Nebenstellenanlagen in Firmen oder Hotels eingesetzt werden. Wird das Mobilfunktelefon 2, beispielsweise durch Entnehmen aus der Halterung des Festnetztelefons 1, vom Festnetztelefon 1 entfernt und dadurch die Datenverbindung zwischen der NFC-Schnittstelle 5 des Festnetztelefons 1 und der NFC-Schnittstelle 7 des Mobilfunktelefons 2 unterbrochen, so kann vorgesehen sein, die Rufnummer des Festnetztelefons 1 automatisch auf das Mobilfunktelefon 2 zu übertragen bzw. eine bestehende Rufumleitung vom Mobilfunktelefon 2 auf das Festnetztelefon 1 zu deaktivieren.

Steht keine permanente Verbindung zwischen dem Festnetztelefon 1 und dem Mobilfunktelefon 2 zur Verfügung, so kann auf die im Folgenden beschriebene Weise ein Zugriff auf das Telefonbuch des Mobilfunktelefons 2 ermöglicht werden:

Das Telefonbuch des Mobilfunktelefons 2 wird zumindest teilweise und/ oder zeitweise im zusätzlichen Server 4 abgelegt und der Rufnummer des Mobilfunktelefons 2 zugeordnet. Bei jeder Anmeldung des Mobilfunktelefons 2 im Mobilfunknetz oder spätestens bei einem Zugriff auf eine Telefonbuchfunktion des Mobilfunktelefons 2 wird zumindest ein Teil der Einträge aus dem zusätzlichen Server 4 gelesen, im Mobilfunktelefon 2 zwischengespeichert und/ oder auf der Anzeige 8 des Mobilfunktelefons 2 angezeigt. In entsprechender Weise wird entweder unmittelbar nach dem Einrichten der Rufumleitung vom Mobilfunktelefon 2 auf das Festnetztelefon 1 oder später beim Zugriff auf eine Telefonbuchfunktion des Festnetztelefons 1 zumindest ein Teil der Einträge aus dem zusätzlichen Server 4 gelesen, im Festnetztelefon 1 zwischengespeichert und/oder auf der Anzeige 6 des Festnetztelefons 1 angezeigt. Neue Einträge können sowohl vom Festnetztelefon 1 als auch vom Mobilfunktelefon 2 auf den zusätzlichen Server 4 zurück geschrieben werden. Um einen Missbrauch zu verhindern, können die Telefonbucheinträge auf dem zusätzlichen Server 4 verschlüsselt abgelegt werden. Dabei kann ein symmetrisches Schlüsselverfahren zum Einsatz kommen. Die Schlüssel sind ausschließlich dem Mobilfunktelefon 2 bekannt und können auch temporär dem Festnetztelefon 1 zur Verfügung gestellt werden.

Eine alternative Vorgehensweise, mit der das Telefonbuch des Mobilfunktelefons 2 dem Festnetztelefon 1 zugänglich gemacht werden kann, besteht darin, bei der Einrichtung der Rufumleitung das Telefonbuch mit Hilfe der NFC-Schnittstellen 5 und 7 vom Mobilfunktelefon 2 an das Festnetztelefon 1 zu übertragen. Wenn diese Vorgehensweise gewählt wird, ist für eine Nutzung des Telefonbuchs keine Anbindung an den zusätzlichen Server 4 erforderlich.

Zum Aufheben der Rufumleitung kann unterschiedlich vorgegangen werden. In einer ersten Variante ist vorgesehen, nach Auswahl einer entsprechenden Funktion des Festnetztelefons 1, die insbesondere über ein Menü zugänglich ist, eine Verbindung zum Mobilfunkserver 3 aufzubauen und die Aufhebung der Rufumleitung anzufordern.

In einer zweiten Variante ist vorgesehen, die Rufumleitung durch eine Eingabe auf dem Mobilfunktelefon 2 aufzuheben. Hierbei baut das Mobilfunktelefon 2 eine Verbindung mit dem Mobilfunkserver 3 auf, um die Aufhebung der Rufumleitung anzufordern.

In einer dritten Variante hängt die Aufhebung der Rufumleitung vom Standort des Mobilfunktelefons 2 ab, der vom Mobilfunknetz ermittelt wird. Dabei wird zunächst der Standort des Mobilfunktelefons 2 im Augenblick der Einrichtung der Rufumleitung ermittelt und als Referenzwert gespeichert. Sobald der aktuelle Standort des Mobilfunktelefons 2 um mehr als eine vorgegebene Entfernung vom gespeicherten Referenzwert abweicht, wird die Rufumleitung automatisch vom Mobilfunkbetreiber aufgehoben.

Die vorstehenden Erläuterungen zu dem in Fig. 1 dargestellten ersten Ausführungsbeispiel des erfindungsgemäßen Systems gelten sinngemäß auch für die im Folgenden beschriebenen Ausführungsbeispiele. Insbesondere sind viele Weiterbildungen und Abwandlungen des ersten Ausführungsbeispiels auch auf die weiteren Ausführungsbeispiele übertragbar, ohne dass dies jeweils eigens erwähnt wird. Dies gilt auch für die weiteren Ausführungsbeispiele untereinander bzw. im Hinblick auf das erste Ausführungsbeispiel.

Fig. 2 zeigt eine schematische Darstellung einer möglichen konstruktiven Ausgestaltung des ersten Ausführungsbeispiels des erfindungsgemäßen Systems, die eine länger dauernde Anordnung des Mobilfunktelefons 2 in unmittelbarer Nähe zum Festnetztelefon 1 ermöglicht. Das Festnetztelefon 1 weist bei dieser Ausgestaltung ein Geräteunterteil 11 auf, auf das ein Telefonhörer 12 aufgelegt ist. Am Geräteunterteil 11 ist zudem eine Aufnahmeschale 13 zur Aufnahme des Mobilfunktelefons 2 ausgebildet. Die Aufnahmeschale 13 ist so angeordnet, dass beim Einsetzen des Mobilfunktelefons 2 in die Aufnahmeschale 13 die NFC-Schnittstelle 5 des Festnetztelefons 1 und die NFC-Schnittstelle 7 des Mobilfunktelefons 2 zueinander in Übertragungsreichweite gelangen. Das bedeutet, dass zwischen dem Festnetztelefon 1 und dem Mobilfunktelefon 2 eine Datenübertragung über die NFC-Schnittstellen 5 und 7 möglich ist, solange sich das Mobilfunktelefon 2 in der Aufnahmeschale 13 des Festnetztelefons 1 befindet. Bei Entnahme des Mobilfunktelefons 2 aus der Aufnahmeschale 13 wird die Datenübertragung zwischen den NFC-Schnittstellen 5 und 7 wegen der kurzen Übertragungsreichweite unterbrochen.

Fig. 3 zeigt ein zweites Ausführungsbeispiel des erfindungsgemäßen Systems in einer Fig. 1 entsprechenden Darstellung. Im Unterschied zu dem in Fig.1 dargestellten ersten Ausführungsbeispiel weist das Mobilfunktelefon 2 beim zweiten Ausführungsbeispiel anstelle des internen Sicherheitsmoduls 10 ein externes Sicherheitsmodul 14 auf, das beispielsweise als eine kontaktlose Chipkarte ausgebildet ist. Das externe Sicherheitsmodul 14 ist in der Lage, über kurze Entfernungen mit der NFC-Schnittstelle 5 des Festnetztelefons 1 zu kommunizieren, die hierzu als ein kontaktloser Chipkartenleser betrieben werden kann. Zur Einrichtung bzw. Aktivierung der Rufumleitung vom Mobilfunktelefon 2 auf das Festnetztelefon 1 wird lediglich das externe Sicherheitsmodul 14, nicht aber das Mobilfunktelefon 2 dem Festnetztelefon 1 so weit angenähert, dass eine Datenübertragung zwischen dem externen Sicherheitsmodul 14 und der NFC-Schnittstelle 5 des Festnetztelefons 1 durchgeführt werden kann. Die Einrichtung der Rufumleitung erfolgt dabei analog wie beim ersten Ausführungsbeispiel. Für das zweite Ausführungsbeispiel kann die in Fig. 2 dargestellte Aufnahmeschale 13 so abgewandelt werden, dass sie das externe Sicherheitsmodul 14 des Mobilfunktelefons 2 aufnehmen kann. Alternativ zum externen Sicherheitsmodul 14 des Mobilfunktelefons 2 kann für die Einrichtung bzw. Aktivierung der Rufumleitung auch ein Personal Digital Assistant (PDA), ein Palm oder ein anderes Gerät eingesetzt werden, in dem die dafür benötigten Daten gespeichert sind und das über eine kontaktlose Schnittstelle verfügt.

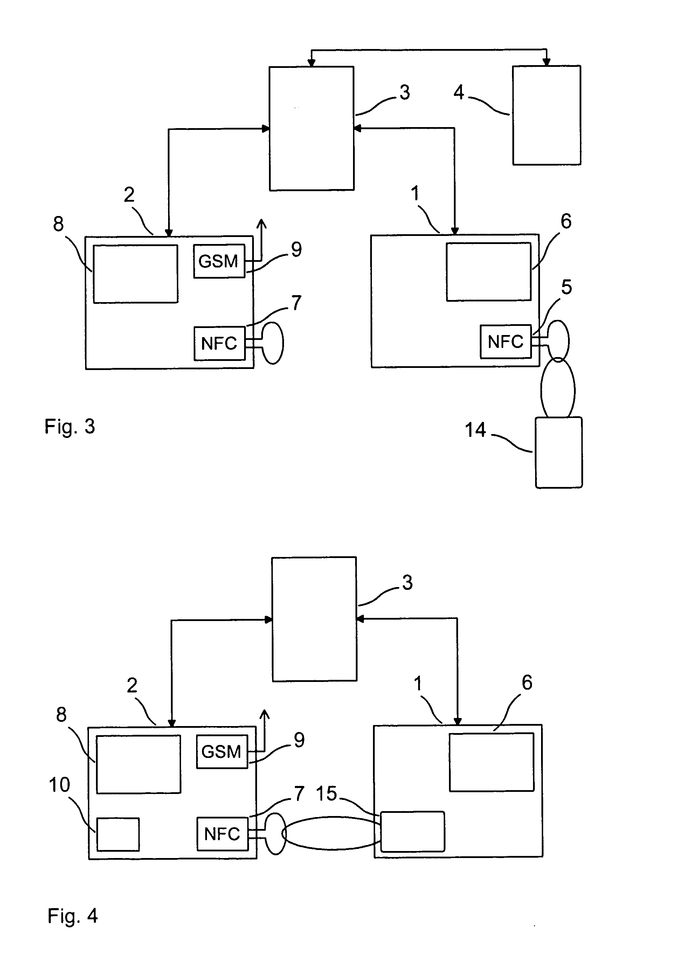

Fig. 4 zeigt ein drittes Ausführungsbeispiel des erfindungsgemäßen Systems in einer Fig.1 entsprechenden Darstellung. Beim dritten Ausführungsbeispiel weist das erfindungsgemäße System wiederum das Festnetztelefon 1, das Mobilfunktelefon 2 und den Mobilfunkserver 3 auf. Das Festnetztelefon 1 weist allerdings im Gegensatz zum ersten und zweiten Ausführungsbeispiel keine NFC-Schnittstelle 5 auf. Stattdessen ist dem Festnetztelefon 1 ein kontaktloses Label 15 zugeordnet. Bei dem kontaktlosen Label 15 handelt es sich um einen Transponder, der aus einem integrierten Schaltkreis und einer daran angeschlossenen Antenne besteht. Anstelle des kontaktlosen Labels 15 kann dem Festnetztelefon 1 auch eine kontaktlose Chipkarte zugeordnet sein. Das kontaktlose Label 15 kann sich innerhalb des Festnetztelefons 1 befinden oder nachträglich auf oder in der Nähe des Festnetztelefons 1 angebracht sein. Das Mobilfunktelefon 2 ist entsprechend dem in Fig.1 dargestellten ersten Ausführungsbeispiel ausgebildet, wobei die NFC-Schnittstelle 7 in der Lage ist, das kontaktlose Label 15 auszulesen, wenn sich dieses in Übertragungsreichweite befindet. Hierzu wird die NFC-Schnittstelle 7 als ein entsprechendes Lesegerät betrieben. Die Einrichtung der Rufumleitung vom Mobilfunktelefon 2 auf das Festnetzgerät 1 wird beim zweiten Ausführungsbeispiel folgendermaßen durchgeführt:

Das Mobilfunktelefon 2 wird in Übertragungsreichweite zum kontaktlosen Label 15 des Festnetztelefons 1 gebracht. Abhängig vom gewünschten Sicherheitsstandard kann dann zunächst eine Authentisierung durchgeführt werden. Danach werden auf dem kontaktlosen Label 15 gespeicherte Daten mit Hilfe der NFC-Schnittstelle 7 des Mobilfunktelefons 2 vom kontaktlosen Label 15 zum Mobilfunktelefon 2 übertragen. Auf dem kontaktlosen Label 15 sind insbesondere die Rufnummer des Festnetztelefons 1 und beispielsweise Tarifinformationen gespeichert. Das Mobilfunktelefon 2 baut eine Verbindung zum Mobilfunkserver 3 auf und fordert mit den Daten des kontaktlosen Labels 15 eine Rufumleitung auf das Festnetztelefon 1 an. Die Rufumleitung kann wiederum so eingerichtet werden, dass auch vom Festnetztelefon 1 ausgehende Gespräche über die Rufnummer des Mobilfunktelefons 2 abgerechnet werden können.

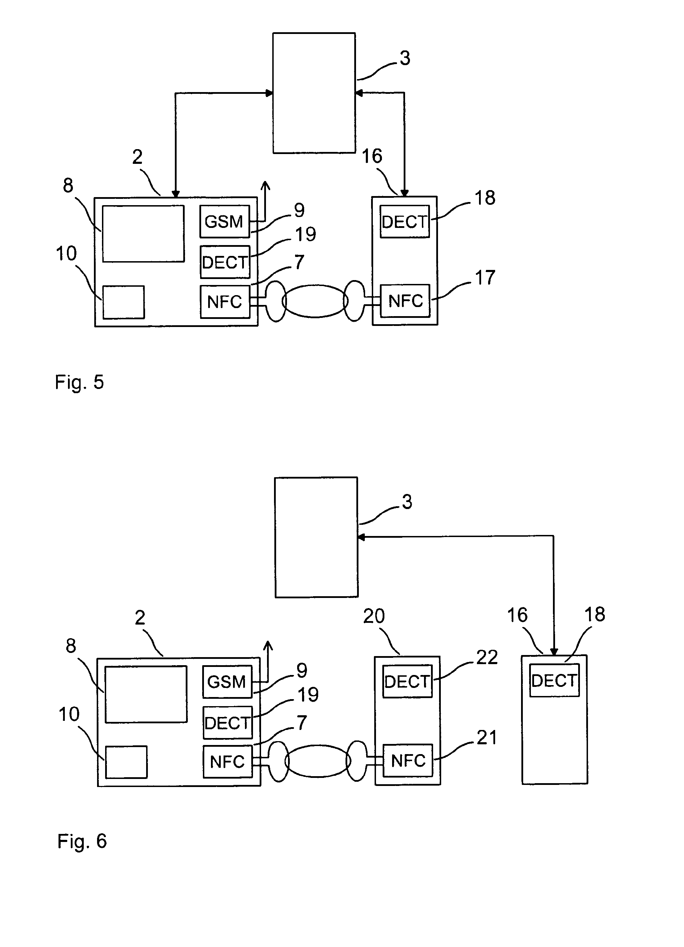

Bei den bislang beschriebenen Ausführungsbeispielen des erfindungsgemäßen Systems wird mit der Aktivierung der Rufumleitung vom Mobilfunktelefon 2 auf das Festnetztelefon 1 die Funktion des Mobilfunktelefons 2 jeweils ganz oder teilweise vom Festnetztelefon 1 übernommen. Wie bereits erwähnt, kann auch eine Rufumleitung in umgekehrter Richtung aktiviert werden und dadurch die Funktion des Festnetztelefons 1 ganz oder teilweise vom Mobilfunktelefon 2 übernommen werden. Anhand der Fig. 5 und 6 werden im Folgenden weitere Ausführungsbeispiele des erfindungsgemäßen Systems beschrieben, bei denen vom Mobilfunktelefon 2 eine Funktion des Festnetztelefons 1 übernommen wird.

Fig. 5 zeigt ein viertes Ausführungsbeispiel des erfindungsgemäßen Systems in einer Fig.1 entsprechenden Darstellung. Beim vierten Ausführungsbeispiel weist das erfindungsgemäße System das Mobilfunktelefon 2, den Mobilfunkserver 3 und eine Basisstation 16 auf, wobei das Mobilfunktelefon 2 und die Basisstation 16 jeweils eine Verbindung zum Mobilfunkserver 3 aufbauen können. Die Basisstation 16 ist am Festnetz angeschlossen und verfügt über eine NFC-Schnittstelle 17 und eine DECT-Schnittstelle 18. DECT steht dabei für Digital Enhanced Cordless Telephone und bezeichnet einen weit verbreiteten Standard für die Datenübertragung bei schnurlosen Telefongeräten für das Festnetz. Das Mobilfunktelefon 2 weist neben der NFC-Schnittstelle 7, der Anzeige 8, der Telekommunikationsschnittstelle 9 und dem internen Sicherheitsmodul 10 eine DECT-Schnittstelle 19 auf. Statt der NFC-Schnittstellen 7 und 17 können beim Mobilfunktelefon 2 und bei der Basisstation 16 auch andere Komponenten zur Durchführung einer kontaktlosen Datenübertragung vorgesehen sein.

Wenn sich die DECT-Schnittstelle 19 des Mobilfunktelefons 2 in Übertragungsreichweite zur DECT-Schnittstelle 18 der Basisstation 16 befindet, ist das Mobilfunktelefon 2 über die DECT-Schnittstellen 18 und 19 an das Festnetz angeschlossen. Somit können mit dem Mobilfunktelefon 2 ein- und ausgehende Anrufe über das Festnetz geführt werden. Voraussetzung ist hierfür allerdings, dass das Mobilfunktelefon 2 an der Basisstation 16 angemeldet ist. Die Anmeldung ist erforderlich, damit nur dazu berechtigte Mobilfunktelefone 2 über die Basisstation 16 Anrufe abwickeln können. Diese Zugangskontrolle ist insbesondere dann wichtig, wenn sich auch nicht berechtigte Mobilfunktelefone 2 in Übertragungsreichweite zur Basisstation 16 befinden können. Dies kann beispielsweise der Fall sein, wenn die Basisstation 16 in einem Hotel, auf einem Flughafen usw. installiert ist.

Im Rahmen der Erfindung erfolgt die Anmeldung des Mobilfunktelefons 2 an der Basisstation 16 durch eine Datenübertragung mit Hilfe der NFC-Schnittstellen 7 und 17. Hierzu wird das Mobilfunktelefon 2 der Basisstation 16 soweit angenähert, dass sich die NFC-Schnittstelle 7 des Mobilfunktelefons 2 und die NFC-Schnittstelle 17 der Basisstation 16 in Übertragungsreichweite zueinander befinden. Die Übertragungsreichweite der NFC-Schnittstellen 7 und 17 ist dabei erheblich geringer als die Übertragungsreichweite der DECT-Schnittstellen 18 und 19. Nach der Annäherung des Mobilfunktelefons 2 an die Basisstation 16 tauschen das Mobilfunktelefon 2 und die Basisstation 16 über die NFC-Schnittstellen 7 und 17 die zur Anmeldung des Mobilfunktelefons 2 an die Basisstation 16 benötigten Daten aus. Dabei kann insbesondere eine Gerätekennung des Mobilfunktelefons 2 übermittelt und eine Authentisierung durchgeführt werden. Zudem erhält das Mobilfunktelefon 2 eine eigene Nebenstellennummer zugewiesen, so dass es eindeutig erreichbar ist.

Sobald das Mobilfunktelefon 2 an der Basisstation 16 angemeldet ist, werden eingehende Anrufe aus dem Mobilfunknetz über das Festnetz auf die dem Mobilfunktelefon 2 zugewiesene Nebenstellennummer umgeleitet. Um dies zu ermöglichen wird zuvor auf analoge Weise, wie für das erste Ausführungsbeispiel des erfindungsgemäßen Systems beschrieben, eine Rufumleitung auf die Rufnummer der Basisstation 16 inklusive der dem Mobilfunktelefon 2 zugewiesenen Nebenstellennummer eingerichtet. Vom Mobilfunktelefon 2 ausgehende Gespräche werden innerhalb der Übertragungsreichweite der DECT-Schnittstelle 18 der Basisstation 16 über den Festnetzanschluss der Basisstation 16 geführt und können über die Nebenstellennummer des Mobilfunktelefons 2 oder über die Rufnummer des Mobilfunktelefons 2 im Mobilfunknetz abgerechnet werden. Wenn das Mobilfunktelefon 2 die Übertragungsreichweite der DECT-Schnittstelle 18 der Basisstation 16 verlässt, wird die Rufumleitung des Mobilfunktelefons 2 auf das Festnetz automatisch aufgehoben.

Da das Mobilfunktelefon 2 einerseits zur Anmeldung an die Bassstation 16 dieser unmittelbar angenähert werden muss und andererseits vom Mobilfunktelefon 2 über die DECT-Schnittstellen 18 und 19 in erheblich größerer Entfernung von der Basisstation 16 Telefongespräche abgewickelt werden können, kann über eine Kontrolle des physikalischen Zugangs zur Basisstation 16 festgelegt werden, welche Mobilfunktelefone 2 für eine Abwicklung von Telefongesprächen über die Basisstation 16 zugelassen werden. Hierzu nähert man die gewünschten Mobilfunktelefone 2 zeitweise der Basisstation 16 bis zur Übertragungsreichweite der NFC-Schnittstellen 7 und 17 an. Den nicht zuzulassenden Mobilfunktelefonen 2 verwehrt man dagegen diese Annäherung. Dadurch kann beispielsweise in Hotels, Krankenhäusern oder auch an Bord von Schiffen oder Flugzeugen die Nutzung einer Basisstation 16 auf sehr einfache Weise geregelt werden. Die Abwicklung der Telefongespräche über die Basisstation 16 ermöglicht den Benutzer, auch dann sein eigenes und damit gewohntes Mobilfunktelefon 2 inklusive des darin gespeicherten Telefonbuchs zu nutzen, wenn kein Mobilfunknetz verfügbar oder die Nutzung eines Mobilfunknetzes nicht erwünscht ist. Außerdem stehen gegebenenfalls Festnetztarife zur Verfügung, die kostengünstiger als entsprechende Mobilfunktarife sind.

Die beschriebene Vorgehensweise kann so weitergebildet werden, dass die Gültigkeit der durchgeführten Anmeldung des Mobilfunktelefons 2 an der Basisstation 16 zeitlich oder hinsichtlich des Tarifs begrenzt ist. Dadurch kann ein potentieller Missbrauch verhindert werden. Ebenso ist es auch möglich, das Mobilfunktelefon 2 über seine NFC-Schnittstelle 7 aktiv von der Basisstation 16 abzumelden.

Ebenso ist es auch möglich, das Mobilfunktelefon 2 bei der Anmeldung an die Basisstation 16 so zu konfigurieren, dass die Telekommunikationsschnittstelle 9 des Mobilfunktelefons 2 vollkommen deaktiviert wird und innerhalb der Übertragungsreichweite der DECT-Schnittstelle 18 der Basisstation 16 deaktiviert bleibt. Die derart deaktivierte Telekommunikationsschnittstelle 9 des Mobilfunktelefons 2 kann auch manuell nicht in Betrieb genommen werden und ist erst wieder nach dem Verlassen der Übertragungsreichweite der DECT-Schnittstelle 18 der Basisstation 16 verfügbar. Dadurch kann beispielsweise verhindert werden, dass die Telekommunikationsschnittstelle 9 des Mobilfunktelefons 2 in einem Bereich in Betrieb genommen wird, in dem starke Sendesignale nicht erwünscht sind. Die Sendeleistung der Telekommunikationsschnittstelle 9 des Mobilfunktelefons 2 ist um ein Vielfaches höher als die Sendeleistung der DECT-Schnittstelle 19.

Das vorstehend beschriebene Anmeldeverfahren kann auch bei Geräten eingesetzt werden, die über eine WLAN- oder eine Bluetooth-Schnittstelle verfügen. WLAN steht dabei für Wireless Local Area Network. Dadurch ist es möglich, dass auch mit derartigen Geräten über die Basisstation 16 telefoniert wird.

Fig. 6 zeigt ein fünftes Ausführungsbeispiel des erfindungsgemäßen Systems in einer Fig.1 entsprechenden Darstellung. Verglichen mit dem in Fig. 5 dargestellten vierten Ausführungsbeispiel weist das fünfte Ausführungsbeispiel zusätzlich eine Anmeldestation 20 auf. Die Anmeldestation 20 verfügt über eine NFC-Schnittstelle 21 und eine DECT-Schnittstelle 22 und ist in Übertragungsreichweite zur DECT-Schnittstelle 18 der Basisstation 16 angeordnet. Weiterhin kann die Anmeldestation 20 figürlich nicht dargestellte Ein- und Ausgabemittel aufweisen. Die Basisstation 16 benötigt beim vierten Ausführungsbeispiel keine NFC-Schnittstelle 17.

Um das Mobilfunktelefon 2 an die Basisstation 16 anzumelden, wird es der Anmeldestation 20 so weit angenähert, dass sich die NFC-Schnittstelle 7 des Mobilfunktelefons 2 und die NFC-Schnittstelle 21 der Anmeldestation 20 in Übertragungsreichweite zueinander befinden. Dann findet eine Datenübertragung zwischen dem Mobilfunktelefon 2 und der Anmeldestation 20 über die NFC-Schnittstellen 7 und 21 statt, die zwischen der Anmeldestation 20 und der Basisstation 16 über die DECT-Schnittstellen 22 und 18 fortgesetzt wird. Mit Hilfe der so übertragenen Daten wird das Mobilfunktelefon 2 an die Basisstation 16 angemeldet. Dadurch ist es möglich, den Aufstellungsort der Basisstation 16 im Hinblick auf die Erzielung einer guten Abstrahlcharakteristik der DECT-Funksignale und damit einer hohen Übertragungsreichweite zu optimieren. Eine physikalische Zugänglichkeit der Basisstation 16, welche die Aufstellungsmöglichkeiten einschränken würde, muss dabei nicht beachtet werden, da lediglich die Anmeldestation 20 physikalisch zugänglich sein muss. Im Übrigen entspricht die Funktionsweise des fünften Ausführungsbeispiels des erfindungsgemäßen Systems sinngemäß dem vierten Ausführungsbeispiel.

In den bislang beschriebenen Ausführungsbeispielen der Erfindung wurde jeweils eine Funktionalität eines Geräts für ein Mobilfunknetz bei einem Gerät für ein Festnetz oder umgekehrt eingerichtet. Ebenso besteht im Rahmen der Erfindung auch die Möglichkeit, eine Funktionalität eines ersten Geräts auf ein zweites Gerät für ein Mobilfunknetz oder ein anderes Funkkommunikationsnetz zu übertragen. Dies wird im Folgenden näher erläutert.

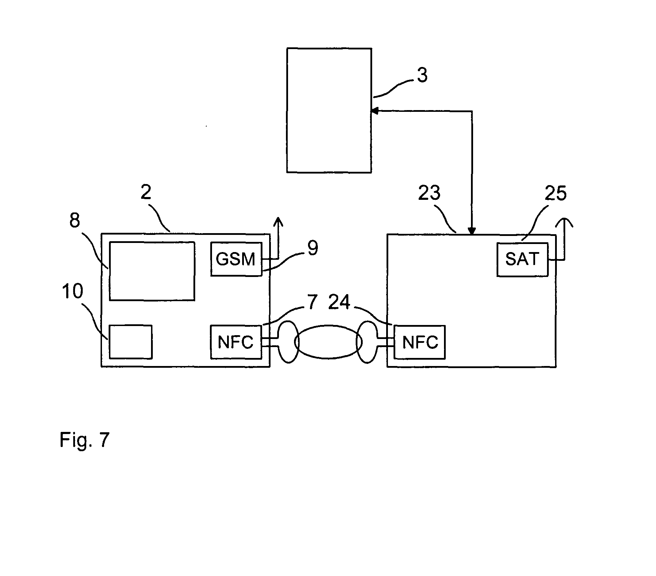

Fig. 7 zeigt ein sechstes Ausführungsbeispiel des erfindungsgemäßen Systems in einer Fig.1 entsprechenden Darstellung. Beim sechsten Ausführungsbeispiel ist zusätzlich zum Mobilfunktelefon 2 und zum Mobilfunkserver 3 ein mobiles Zusatzgerät 23 vorgesehen. Das Mobilfunkgerät 2 ist in entsprechender Weise wie bei dem in Fig.1 dargestellten ersten Ausführungsbeispiel des erfindungsgemäßen Systems ausgebildet. Das mobile Zusatzgerät 23 verfügt über eine NFC-Schnittstelle 24 und eine Telekommunikationsschnittstelle 25 für ein Mobilfunknetz oder ein anderes Funkkommunikationsnetz, zum Beispiel Satellitentelefon (SAT).

Um die Rufnummer des Mobilfunktelefons 2 vorübergehend auf das mobile Zusatzgerät 23 umzuleiten wird analog zur bereits mehrfach geschilderten Vorgehensweise das Mobilfunktelefon 2 dem mobilen Zusatzgerät 23 so weit angenähert, dass eine Datenübertragung zwischen der NFC-Schnittstelle 7 des Mobilfunktelefons 2 und der NFC-Schnittstelle 24 des mobilen Zusatzgeräts 23 möglich ist. Nachdem eine ggf. vorgesehene Authentisierung durchgeführt wurde, wird vom mobilen Zusatzgerät 23 eine Verbindung zum Mobilfunkserver 3 aufgebaut, um die Umleitung der Rufnummer des Mobilfunktelefons 2 auf das mobile Zusatzgerät 23 anzufordern. Hierbei kann wiederum in entsprechender Weise vorgegangen werden, wie für das in Fig. 1 dargestellte erste Ausführungsbeispiel des erfindungsgemäßen Systems erläutert wurde. Durch eine derartige Rufumleitung kann erreicht werden, dass die Rufnummer des Mobilfunktelefons 2 auch an Orten zur Verfügung steht, an denen das Mobilfunktelefon 2 über das zugehörige Mobilfunknetz nicht erreichbar ist und auch kein Festnetz verfügbar ist, zum Beispiel an Bord von Hochseeschiffen oder von Flugzeugen.

Die Rufumleitung kann so konfiguriert sein, dass das mobile Zusatzgerät 23 mit der Aktivierung der Rufumleitung die Funktion des Mobilfunktelefons 2 übernimmt und auch die erforderliche Bedienoberfläche bereitstellt. Dieser Zustand bleibt solange erhalten, bis die Rufumleitung wieder aufgehoben wird. Alternativ dazu ist es auch möglich, die Bedienung auch nach der Aktivierung der Rufumleitung oder einer sonstigen Funktionalität ganz oder teilweise über das Mobilfunktelefon 2 abzuwickeln, um den Benutzer seine gewohnte Bedienoberfläche weiterhin zur Verfügung zu stellen. In diesem Fall verbleibt das Mobilfunktelefon 2 in Übertragungsreichweite zur NFC-Schnittstelle 24 des mobilen Zusatzgeräts 23, solange die Bedienoberfläche des Mobilfunktelefons 2 für die Nutzung des mobilen Zusatzgeräts 23 zur Verfügung stehen soll. Für diesen Zweck können beispielsweise in Flugzeugen spezielle Halterungen vorgesehen sein, in welche die Flugpassagiere ihre Mobilfunktelefone 2 einsetzen. Analog zum ersten Ausführungsbeispiel wird der für die Bedienung erforderliche Datenaustausch zwischen dem Mobilfunktelefon 2 und dem mobilen Zusatzgerät 23 jeweils über deren NFC-Schnittstellen 7 und 24 abgewickelt. Auf diese Weise ist es auch beim sechsten Ausführungsbeispiel möglich, eine Rufnummer eines Teilnehmers aus dem Telefonbuch des Mobilfunktelefons 2 auszuwählen, indem das Mobilfunktelefon 2 in gewohnter Weise bedient wird. Beim Anwählen des Teilnehmers wird nicht die Telekommunikationsschnittstelle 9 des Mobilfunktelefons 2 aktiviert, sondern es werden die Teilnehmerdaten, insbesondere die Rufnummer des Teilnehmers, über die NFC-Schnittstellen 7 und 24 vom Mobilfunktelefon 2 zum mobilen Zusatzgerät 23 übertragen, das die Verbindung mit dem Teilnehmer aufbaut. Auf analoge Weise können eine Verbindung abgebaut, Kurznachrichten gesendet oder empfangen, ein E-Mail Server angesprochen oder andere Dienste in Anspruch genommen werden. Weiterhin kann beim sechsten Ausführungsbeispiel eine vorübergehende Deaktivierung der Telekommunikationsschnittstelle 9 veranlasst werden, wie dies bereits für das erste Ausführungsbeispiel erläutert wurde.

## Patentansprüche

1. Verfahren zum Einrichten und/oder Aktivieren einer Funktionalität für ein erstes und/ oder ein zweites Telekommunikationsgerät (1, 2, 16, 23), wobei das erste Telekommunikationsgerät (1, 2,16, 23) und das zweite Telekommunikationsgerät (1, 2, 16, 23) oder eine dem zweiten Telekommunikationsgerät (1, 2, 16, 23) zugeordnete Einheit (14,15, 20) einander angenähert werden, eine direkte Datenübertragung zwischen dem ersten Telekommunikationsgerät (1, 2,16, 23) und dem zweiten Telekommunikationsgerät (1, 2,16, 23) oder der dem zweiten Telekommunikationsgerät (1, 2,16, 23) zugeordneten Einheit (14,15, 20) durchgeführt wird und im Rahmen der Datenübertragung für die Einrichtung und/ oder Aktivierung der Funktionalität benötigte Informationen übertragen werden.

2. Verfahren nach Anspruch 1, **dadurch gekennzeichnet, dass** die Einrichtung und/ oder Aktivierung der Funktionalität von einer Eingabe auf einem der beiden Telekommunikationsgeräte (1, 2,16, 23) abhängig gemacht wird.

3. Verfahren nach einem der vorhergehenden Ansprüche, **dadurch gekennzeichnet, dass** die Datenübertragung zwischen dem ersten Telekommunikationsgerät (1, 2,16, 23) und dem zweiten Telekommunikationsgerät (1, 2,16, 23) oder der dem zweiten Telekommunikationsgerät (1, 2, 16, 23) zugeordneten Einheit (14, 15, 20) kontaktlos durchgeführt wird.

4. Verfahren nach Anspruch 3, **dadurch gekennzeichnet, dass** die Datenübertragung zwischen dem ersten Telekommunikationsgerät (1, 2, 16, 23) und dem zweiten Telekommunikationsgerät (1, 2,16, 23) oder der dem zweiten Telekommunikationsgerät (1, 2,16, 23) zugeordneten Einheit (14,15, 20) in Form einer Nahfeldkommunikation durchgeführt wird.

5. Verfahren nach einem der vorhergehenden Ansprüche, **dadurch gekennzeichnet, dass** im Rahmen der Datenübertragung zwischen dem ersten Telekommunikationsgerät (1, 2,16, 23) und dem zweiten Telekommunikationsgerät (1, 2,16, 23) oder der dem zweiten Telekommunikationsgerät (1, 2, 16, 23) zugeordneten Einheit (14,15, 20) eine Authentisierung durchgeführt wird.

6. Verfahren nach einem der vorhergehenden Ansprüche, **dadurch gekennzeichnet, dass** im Rahmen der Datenübertragung zwischen dem ersten Telekommunikationsgerät (1, 2, 16, 23) und dem zweiten Telekommunikationsgerät (1, 2, 16, 23) weitere Informationen, insbesondere Informationen über ein im ersten oder zweiten Telekommunikationsgerät (1, 2,16, 23) gespeichertes Telefonbuch, übertragen werden.

7. Verfahren nach einem der vorhergehenden Ansprüche, **dadurch gekennzeichnet, dass** während der Einrichtung und/ oder Aktivierung der Funktionalität für das erste und/ oder das zweite Telekommunikationsgerät (1, 2,16, 23) eine Datenverbindung zu einem Server (3) eines Netzbetreibers oder Dienstanbieters hergestellt wird.

8. Verfahren nach einem der vorhergehenden Ansprüche, **dadurch gekennzeichnet, dass** beim Aktivieren der Funktionalität für das erste und/ oder das zweite Telekommunikationsgerät (1, 2, 16, 23) eine Telekommunikationsschnittstelle (9, 25) des ersten oder zweiten Telekommunikationsgeräts (1, 2,16, 23) deaktiviert wird, die für die Abwicklung der Telekommunikation vorgesehen ist.

9. Verfahren nach einem der vorhergehenden Ansprüche, **dadurch gekennzeichnet, dass** das erste Telekommunikationsgerät (1, 2,16, 23) und das zweite Telekommunikationsgerät (1, 2, 16, 23) oder die dem zweiten Telekommunikationsgerät (1, 2,16, 23) zugeordnete Einheit (14,15, 20) nach Einrichtung und/ oder Aktivierung der Funktionalität in der aneinander angenäherten Position verbleiben.

10. Verfahren nach Anspruch 9, **dadurch gekennzeichnet, dass** die Bedienung des ersten Telekommunikationsgeräts (1, 2,16, 23) wenigstens teilweise über eine Bedienoberfläche des zweiten Telekommunikationsgeräts (1, 2,16, 23) oder umgekehrt durchgeführt wird.

11. Verfahren nach einem der vorhergehenden Ansprüche, **dadurch gekennzeichnet, dass** die Funktionalität für das erste und/ oder das zweite Telekommunikationsgerät (1, 2, 16, 23) durch eine Mitteilung des ersten oder zweiten Telekommunikationsgeräts (1, 2,16, 23) an den Server (3) des Netzbetreibers oder Dienstanbieters deaktiviert wird.

12. Verfahren nach einem der vorhergehenden Ansprüche, **dadurch gekennzeichnet, dass** die Funktionalität für das erste und/ oder das zweite Telekommunikationsgerät (1, 2,16, 23) deaktiviert wird, wenn für das erste oder zweite Telekommunikationsgerät (1, 2,16, 23) die Entfernung zwischen seiner aktuellen Position und seiner Position zum Zeitpunkt der Aktivierung der Funktionalität einen vorgegebenen Wert überschreitet.

13. Verfahren nach einem der vorhergehenden Ansprüche, **dadurch gekennzeichnet, dass** die Funktionalität für das erste und/oder das zweite Telekommunikationsgerät (1, 2,16, 23) deaktiviert wird, wenn seit dem Zeitpunkt der Aktivierung der Funktionalität ein vorgegebener Zeitraum verstrichen ist.

14. Verfahren nach einem der vorhergehenden Ansprüche, **dadurch gekennzeichnet, dass** im Rahmen der Einrichtung und/oder Aktivierung der Funktionalität für das erste und/oder das zweite Telekommunikationsgerät (1, 2,16, 23) eine Funktion des zweiten Telekommunikationsgeräts (1, 2, 16, 23) auf das erste Telekommunikationsgerät (1, 2,16, 23) oder umgekehrt übertragen wird.

15. Verfahren nach einem der vorhergehenden Ansprüche, **dadurch gekennzeichnet, dass** im Rahmen der Einrichtung und/oder Aktivierung der Funktionalität für das erste und/ oder das zweite Telekommunikationsgerät (1, 2,16, 23) eine Rufumleitung zwischen dem ersten und dem zweiten Telekommunikationsgerät (1, 2,16, 23) eingerichtet und/oder aktiviert wird.

16. Verfahren nach einem der vorhergehenden Ansprüche, **dadurch gekennzeichnet, dass** im Rahmen der Einrichtung und/oder Aktivierung der Funktionalität für das erste und/oder das zweite Telekommunikationsgerät (1, 2,16, 23) das erste Telekommunikationsgerät (1, 2, 16, 23) beim zweiten Telekommunikationsgerät (1, 2, 16, 23) für eine Inanspruchnahme des Netzzugangs des zweiten Telekommunikationsgeräts (1, 2,16, 23) angemeldet wird.

17. Verfahren nach Anspruch 16, **dadurch gekennzeichnet, dass** eine Kontrolle über die Inanspruchnahme des Netzzugangs des zweiten Telekommunikationsgeräts (1, 2,16, 23) **dadurch** ausgeübt wird, dass die Annäherung des ersten Telekommunikationsgeräts (1, 2,16, 23) und des zweiten Telekommunikationsgeräts (1, 2, 16, 23) oder der dem zweiten Telekommunikationsgerät (1, 2, 16, 23) zugeordneten Einheit (14,15, 20) an Bedingungen geknüpft wird.

18. Verfahren nach einem der Ansprüche 16 oder 17, **dadurch gekennzeichnet, dass** die Inanspruchnahme des Netzzugangs des zweiten Telekommunikationsgeräts (1, 2,16, 23) über eine schnurlose Kommunikation zwischen dem ersten und dem zweiten Telekommunikationsgerät (1, 2,16, 23), insbesondere gemäß dem Digital Enhanced Cordless Telephone Standard DECT, erfolgt.

19. System mit einem ersten und einem zweiten Telekommunikationsgerät (1, 2, 16, 23), wobei die beiden Telekommunikationsgeräte (1, 2,16, 23) jeweils über eine Schnittstelle (5, 7, 17, 24) verfügen, über die eine direkte Datenübertragung zwischen den beiden Telekommunikationsgeräten (1, 2,16, 23) durchführbar ist, **dadurch gekennzeichnet, dass** eine Funktionalität für das erste und/oder das zweite Telekommunikationsgerät (1, 2,16, 23) mit Hilfe einer über die Schnittstellen (5, 7,17, 24) abgewickelten Übertragung von Informationen zwischen den beiden Telekommunikationsgeräten (1, 2, 16, 23) einrichtbar und/oder aktivierbar ist.

20. System mit einem ersten und einem zweiten Telekommunikationsgerät (1, 2,16, 23), wobei das erste Telekommunikationsgerät (1, 2,16, 23) über eine Schnittstelle (5, 7, 17, 24) verfügt und dem zweiten Telekommunikationsgerät (1, 2, 16, 23) eine Einheit (14,15, 20) zugeordnet ist, mit der das erste Telekommunikationsgerät (1, 2, 16, 23) über die Schnittstelle (5, 7, 17, 24) kommunizieren kann, **dadurch gekennzeichnet, dass** eine Funktionalität für das erste und/ oder das zweite Telekommunikationsgerät (1, 2,16, 23) mit Hilfe einer über die Schnittstelle (5, 7,17, 24) abgewickelten Übertragung von Informationen zwischen dem ersten Telekommunikationsgerät (1, 2, 16, 23) und der dem zweiten Telekommunikationsgerät (1, 2,16, 23) zugeordneten Einheit (14, 15, 20) einrichtbar und/oder aktivierbar ist.

21. System nach Anspruch 20, **dadurch gekennzeichnet, dass** die dem zweiten Telekommunikationsgerät (1, 2, 16, 23) zugeordnete Einheit (14, 15, 20) als ein externes Sicherheitsmodul, ein kontaktloses Label oder als ein Gerät ausgebildet ist, das in Datenverbindung mit dem zweiten Telekommunikationsgerät (1, 2,16, 23) steht.

22. System nach einem der Ansprüche 19 bis 21, **dadurch gekennzeichnet, dass** es sich bei dem ersten und dem zweiten Telekommunikationsgerät (1, 2, 16, 23) um ein Endgerät eines Festnetzes oder eines Funkkommunikationsnetzes handelt.

23. System nach einem der Ansprüche 19 bis 22, **dadurch gekennzeichnet, dass** das erste Telekommunikationsgerät (1, 2, 16, 23) eine Aufnahmeeinrichtung (13) zur Aufnahme des zweiten Telekommunikationsgeräts (1, 2,16, 23) oder der dem zweiten Telekommunikationsgerät (1, 2,16, 23) zugeordneten Einheit (14,15, 20) aufweist.
